Europäisches Patentamt

European Patent Office

Office européen des brevets

(19)

(11) **EP 1 052 860 A1**

(12) **EUROPÄISCHE PATENTANMELDUNG**

(43) Veröffentlichungstag:
**15.11.2000 Patentblatt 2000/46**

(51) Int Cl.⁷: **H04Q 3/66**

(21) Anmeldenummer: **99810430.1**

(22) Anmeldetag: **14.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ascom AG**
**3000 Bern 14 (CH)**

(72) Erfinder:
• **Juric, Pero**
**4512 Bellach (CH)**

• **Grossenbacher, Andreas**
**3422 Alchenflüh (CH)**

(74) Vertreter: **Roshardt, Werner Alfred, Dipl.-Phys.**
**Keller & Partner**
**Patentanwälte AG**
**Zeughausgasse 5**
**Postfach**
**3000 Bern 7 (CH)**

(54) **Verfahren zur Auswahl eines Leitweges bei einem Verbindungsaufbau**

(57) Das erfindungsgemässe Verfahren zur Auswahl eines Verbindungsweges bei einem Verbindungsaufbau zwischen zwei Punkten (7.1, 8) eines Telekommunikationsnetzwerkes mit mehreren verschiedenen Verbindungswegen (24.1, 24.2, 24.3) zwischen diesen beiden Punkten (7.1, 8) benutzt als Entscheidungsgrundlage für das Routing nicht nur die in der Leitwegtabelle (23) vorgängig eingetragenen Informationen über die Struktur bzw. die Vernetzung und die Verbindungskosten der einzelnen Verbindungswege (24.1, 24.2, 24.3), sondern auch von einer Messvorrichtung (10.5) während vorangegangener Verbindungen (sowohl beim Auf- resp. Abbau, als auch während der Verbindung) gemessene und ebenfalls in der Leitwegtabelle (23) abgespeicherte Informationen über die Qualität der Verbindungswege.

Fig. 2

**Beschreibung**

**Technisches Gebiet**

Die Erfindung betrifft ein Verfahren zur Auswahl eines Leitweges bei einem Verbindungsaufbau von einem Punkt A zu einem Punkt B in einem Telekommunikationsnetzwerk mit mehreren Verbindungswegen zwischen den Punkten A und B unter Berücksichtigung von Verbindungseigenschaften der einzelnen Verbindungswege. Ferner betrifft die Erfindung eine Schaltungsanordnung zur Durchführung dieses Verfahrens.

**Stand der Technik**

Telekommunikationsnetze wurden seit Anbeginn maschenförmig konzipiert und realisiert. So existieren zwischen allen Knotenpunkten des Netzes mehrere, redundante Verbindungen. Dadurch können allfällige Leitungsunterbrüche oder gar Knotenausfälle sofort durch Wahl eines anderen Verbindungsweges umgangen werden. Die Auswahl eines bestimmten Verbindungsweges geschieht mittels sogenannter Leitwegtabellen. In diese Tabellen werden neben Informationen über die vom Betreiber des Netzes festgelegte Reihenfolge, in der die Verbindungswege zu belegen sind, beispielsweise auch Informationen über die entsprechenden Verbindungskosten eingetragen. Diese Informationen ändern meist nur, wenn die Struktur des Netzes verändert wird oder wenn die Tarife für die Benutzung der Leitungen an neue Gegebenheiten angepasst werden müssen, und werden daher üblicherweise von Hand in den Tabellen eingetragen. Mit Hilfe dieser Leitwegtabellen kann dann jeweils die preisgünstigste oder schnellste (weil kürzeste) verfügbare Verbindung bestimmt und ausgewählt werden. Die Auswahl eines bestimmten Verbindungsweges aufgrund vorgegebener Informationen und zu erfüllender Kriterien wird Routing genannt.

Aus der EP 0 865 215 A2 ist z.B. ein Routing-Verfahren bekannt, bei welchem der Router Informationen über die Verbindungskosten der zur Verfügung stehenden Verbindungswege von einer externen Serviceplattform empfängt und diese abspeichert. Aufgrund dieser Informationen wird vom Router bei einem Verbindungsaufbau die preisgünstigste Verbindung ausgewählt.

Mit dem Aufkommen verschiedenster Dienste wie "synchrone/asynchrone Datenübertragung", "Fax- und Modemverbindungen" oder auch "Audio- bzw. Videoverbindungen", wird ein solches Routingsystem jedoch nicht mehr allen Anforderungen gerecht, da die preisgünstigste bzw. kürzeste Verbindung nicht unbedingt auch alle notwendigen bzw. wünschenswerten Voraussetzungen bezüglich der Übertragungsgeschwindigkeit, der Konstanz der Übertragungslaufzeiten, der Fehlerrate oder anderer Kriterien erfüllt.

**Darstellung der Erfindung**

Aufgabe der Erfindung ist es, ein Verfahren der eingangs genannten Art anzugeben, das es erlaubt, die beim Stand der Technik vorhandenen Nachteile zu vermeiden und die Zuverlässigkeit eines Verbindungsweges zu berücksichtigen.

Die Lösung der Aufgabe ist durch die Merkmale des Anspruchs 1 definiert. Gemäss der Erfindung werden bei der Auswahl eines Leitweges zwischen zwei Punkten A und B eines Telekommunikationsnetzwerkes, wobei zwischen den beiden Punkten A und B mehrere verschiedene Verbindungswege existieren, nicht wie beim Stand der Technik nur statische Verbindungseigenschaften wie Informationen über die Verbindungskosten oder über die Struktur bzw. Vernetzung der Verbindungswege, sondern auch Informationen über dynamisch, räumlich und/oder zeitlich veränderliche Verbindungseigenschaften berücksichtigt, welche in regelmässigen oder unregelmässigen Abständen neu bestimmt bzw. gemessen und automatisch in den Leitwegtabellen nachgeführt werden.

Die bei der Auswahl eines Leitweges berücksichtigten, zeitlich und/oder räumlich veränderlichen Informationen über einen Verbindungsweg beinhalten erfindungsgemäss Informationen über die Qualität der Verbindungswege. Diese umfassen z.B. statistische Grössen wie die relative Häufigkeit erfolgloser Anrufe, die relative Häufigkeit des Abbruchs bestehender Verbindungen und die Dauer eines Verbindungsabbaus sowie physikalische Netzeigenschaften wie Signallaufzeiten, Echo und Round Trip Delay. In Mobilfunknetzen können zusätzliche Informationen hinzukommen wie beispielsweise Angaben über Erreichbarkeit, Überdeckungsgrad, genaue geographische Position des Mobilfunktelefons sowie Angaben über die Sprachverständlichkeit, welche ihrerseits aus verschiedenen gemessenen Parametern ermittelt wird. (Von ETSI/ITU gibt es das sogenannte E-Modell, ein Berechnungsmodell, mit dem aus ca. zwölf Switching- und Transmission-Parameter eine Sprachverständlichkeits-Qualität berechnet werden kann. Dieses E-Modell wird häufig zur Planung eines Telekommunikationsnetzwerkes benutzt, um die Sprachverständlichkeits-Qualität vorauszusagen.) Mit dem Aufkommen der Übertragung von Sprachsignalen als Paketdaten (z.B. "Voice over IP"), bei welchen die Sprachsignale digitalisiert und in Paketen von einigen Bytes übertragen werden, gewinnt auch die Messung der Sprachverständlichkeit in leitergebundenen Netzen an Bedeutung.

Jeder mögliche Dienst kann einer bestimmten Dienstklasse (z.B. asynchroner Datenverkehr, analoge Fax- und Modem-Verbindungen, synchrone Audioverbindungen (Telefonie oder Hifi-Audio), synchrone Videoverbindung (mit/ohne Sprache), Burst-Hochleistungs-Datenverkehr) zugeordnet werden. Da für jede Dienstklasse ein minimales Anforderungsprofil (eine sogenannte Dienstgüteklasse) erstellt werden kann, ist es möglich, bei der Auswahl eines Leitweges für eine gewünschte Verbindung, über die ein bestimmter Dienst abgewickelt werden soll, nicht nur die statischen Verbindungseigenschaften, sondern auch die ermittelten und automatisch gespeicherten bzw. in den Leitwegtabellen nachgeführten, dynamischen Verbindungseigenschaften zu berücksichtigen, damit die zur Abwicklung dieses Dienstes notwendigen oder wünschenswerten Minimalanforderungen erfüllt und der den vorgegebenen Kriterien am besten entsprechende Verbindungsweg ausgewählt werden kann. Es ist nicht sinnvoll, die Qualität eines Verbindungsweges über alle Dienstklassen hinweg durch einen einzigen Qualitätsparameter auszudrükken. Es gibt daher verschiedene Möglichkeiten, die in den Leitwegtabellen abgespeicherten Informationen zur Bestimmung der Qualität Q, d.h. zur Bewertung eines Verbindungsweges für die Abwicklung eines bestimmten Dienstes, zu benutzen. Eine Möglichkeit besteht z.B. darin, gewisse Switching- und/oder Transmission-Parameter $(Q_{SW1}, Q_{SW2}, ..., Q_{TRM1}, Q_{TRM2}, ...)$, von denen jeder einzelne die Anforderungen der gewählten Dienstgüteklasse erfüllt, mit zuvor bestimmten Gewichtungskoeffizienten $(k_{SW1}, k_{SW2}, ..., k_{TRM1}, k_{TRM2}, ...,$ wobei die Summe aller Gewichtungskoeffizienten $k_i$ gleich eins ist) zu multiplizieren und die einzelnen Produkte aufzusummieren:

$$Q = k_{SW1}{}^*Q_{SW1} + k_{SW2}{}^*Q_{SW2} + ... +$$
$$'k_{TRM1}{}^*Q_{TRM1} + k_{TRM2}{}^*Q_{TRM2} + ...$$

Erfüllt dagegen einer der verwendeten Switching- oder Transmission-Parameter die Anforderungen der gewählten Dienstgüteklasse nicht, wird Q = 0 gesetzt. Die Koeffizienten $(k_{SW1}, k_{SW2}, ..., k_{TRM1}, k_{TRM2}, ...)$ werden hierzu beispielsweise nach jeder Messung mit Hilfe einer Auswerte-Funktion, die sich auf Verfahren der Künstlichen Intelligenz und der Neuronalen Netze abstützt, neu bestimmt, oder sie werden anhand von SQL-Abfragen der entsprechenden Tabellen bzw. Datenbanken vor einem Verbindungsaufbau neu festgelegt. Dadurch ergibt sich eine adaptive Leitweglenkung, die flexibel auf sich ändernde Umweltbedingungen reagieren kann. Bei der Auswahl eines bestimmten Leitweges werden nun aber nicht nur die Werte Q für die einzelnen Verbindungswege, sondern auch die statischen Leitwegparameter (z.B. Verbindungskosten) und die ebenfalls statischen Vorgaben einzelner Parameter für bestimmte Dienstgüteklassen (für die Übertragung von Videodaten in Echtzeit muss z.B. eine Mindest-Bandbreite zur Verfügung stehen) berücksichtigt. Konnten für einen bestimmten Verbindungsweg noch keine Messungen durchgeführt werden, wie das zu Beginn bei jedem Verbindungsweg der Fall ist, wird die Leitweglenkung nur durch die statisch vorgegebenen Parameter gesteuert.

Selbstverständlich kann das Best Quality Routing-Verfahren auch so ausgelegt sein, dass vom Benutzer vorgegebene Routinginformationen, also z.B. ein von Hand eingetippter Prefixcode, Vorrang hat gegenüber dem vom System ermittelten Leitweg.

Dieses Verfahren zur Auswahl eines Leitweges unter Berücksichtigung von Informationen über die Qualität der einzelnen Verbindungswege wird im folgenden "Best Quality Routing" genannt, auch wenn nicht immer der Verbindungsweg mit der besten Verbindungsqualität gefordert ist.

Bei einer bevorzugten Ausführungsform der Erfindung werden für das Best Quality Routing nicht nur Informationen über die Verbindungsqualität, sondern vielmehr Informationen über das Verhältnis von Verbindungsqualität zu den Verbindungskosten der einzelnen Verbindungswege berücksichtigt. So wird bei Verbindungswegen mit vergleichbarer Verbindungsqualität sichergestellt, dass der preisgünstigste Verbindungsweg für die Verbindung verwendet wird.

Einige der Informationen über die Qualität der Verbindungswege werden aus der Messung von Parametern gewonnen, die entweder mittels Messung der Signalisierungsmeldungen (Switching Parameter) bei einem Verbindungsauf- bzw. abbau respektive während einer bestehenden Verbindung oder mittels Messung eines über die Verbindung übertragenen Signals (Transmission Parameter) ermittelt werden.

Das zur Messung gewisser "Transmission Parameter" über die Verbindung übertragene Signal ist entweder ein von einem Benutzer bei der normalen Benutzung der Leitung erzeugtes Signal (non-intrusive Messung) oder aber ein spezielles Messsignal, das zuvor in die bestehende Verbindung eingekoppelt wurde (intrusive Messung).

Erfindungsgemäss kann zur Bestimmung dieser Parameter nicht nur eine bestehende, von einem Benutzer aufgebaute Verbindung, sondern auch eine speziell zu Testzwecken aufgebaute Verbindung verwendet werden.

Die Durchführung der Messungen geschieht mittels in die Verbindungswege eingeschalteter Messvorrichtungen. Da die von einer Messvorrichtung durchgeführten Messungen "end-to-end", also für die ganze Verbindungsstrecke gelten, ist der genaue Ort der Messung unerheblich. Damit die Messung aber möglichst aus der Sicht des Benutzers erfolgt, liegt der Messort vorzugsweise vor dem ersten relevanten Vermittlungs-Knoten. Es gibt auch Parameter, die nur an ganz bestimmten Orten, also z.B. zwischen dem Benutzer und dem ersten relevanten Vermittlungs-Knoten, überhaupt gemessen werden können. Idealerweise wird die Messung beim Netzabschluss durchgeführt, also z.B. dort, wo eine Teilnehmervermittlungsanlage (=TVA) an das Telekommunikationsnetz angeschlossen wird.

Um möglichst viele Informationen für die Neuberechnung der Leitwegtabellen zur Verfügung zu haben, können nebst eigenen Messungen auch Messwerte von anderen Messsystemen oder von anderen Netzwerken her importiert werden.

Die Messvorrichtungen führen jedoch nicht nur die notwendigen Messungen durch, sondern werten die gemessenen Daten teilweise auch gleich selber aus. Die so erhaltenen Informationen stehen anschliessend sofort für die Leitweglenkung zur Verfügung. Zusätzlich zur Messung und Auswertung kann in den Messvorrichtungen aber noch eine weitere Funktion realisiert sein. Sie können nämlich nicht nur als Messempfänger, sondern gleichzeitig auch als Messsender dienen, welche die für einzelne Messungen notwendigen Messsignale aussenden.

Moderne Kommunikationsnetze bieten mehrere Möglichkeiten, das erfindungsgemässe Verfahren anzuwenden. In einem Vermittlungsknoten, also z.B. in einer Amtszentrale eines Telekommunikationsnetzes, wird der Leitweg zu einem anderen Vermittlungsknoten aufgrund der verfügbaren Parameter als Leitungsbündel und als Übertragungskanal in diesem Leitungsbündel bestimmt. Diese Art der Leitweglenkung wird meist in öffentlichen Telekommunikationsnetzwerken angewendet, wo dem einzelnen Teilnehmer nur dieses eine Netz zur Verfügung steht.

Werden dem Teilnehmer aber von verschiedenen (meist privaten) Providern (Anbieter von Telekommunikations-Diensten) mehrere verschiedene Telekommunikationsnetze zur Benutzung angeboten, kann die erfindungsgemässe Router-Funktionalität auch in anderen Geräten wie z.B. in einer Teilnehmerstation, einer Hauszentrale oder auf der Teilnehmerseite einer Amtszentrale implementiert sein. Dabei wird ein bestimmter Leitweg durch einen sogenannten Prefixcode definiert, der zu einem bestimmten Provider gehört, über dessen Netz dann der angeforderte Dienst abgewickelt werden soll. Schliesslich kann auch jeder Provider selber, analog zu den schon erwähnten öffentlichen Netzen, in seinem Netz das erfindungsgemässe Best Quality Routing-Verfahren anwenden.

Eine Schaltungsanordnung zur Durchführung des erfindungsgemässen Verfahrens zur Auswahl eines Leitweges zwischen zwei Punkten eines Telekommunikationsnetzes, wobei zwischen den beiden Punkten mindestens zwei verschiedene Verbindungswege existieren, besteht zusätzlich zu den üblichen Komponenten wie Vermittlungsknoten und Teilnehmern aus mehreren Messvorrichtungen zur Messung und Auswertung der dynamisch, zeitlich und/oder räumlich veränderlichen Verbindungseigenschaften sowie einem Router, der die Leitwege der gewünschten Verbindungen unter Berücksichtigung der Informationen der Messvorrichtungen auswählt.

Werden zur Durchführung der Messungen nicht bestehende, durch einen Benutzer aufgebaute Verbindungen, sondern speziell zu diesem Zweck aufgebaute Testverbindungen benutzt, verfügt die erfindungsgemässe Schaltungsanordnung über spezielle Testgeräte, die diese Testverbindungen aufbauen. Solche Testgeräte (bzw. deren Funktionalität) können entweder als selbständige Geräte konzipiert sein oder in andere Geräte wie z.B. ein Teilnehmer-Endgerät, einen Vermittlungsknoten des Telekommunikationsnetzes oder, wie schon erwähnt, eine Messvorrichtung integriert sein. Zusätzlich können diese Testgeräte auch als Messsender benutzt werden, um die speziellen Messsignale, die zu einem Messempfänger gesandt und dort gemessen und analysiert werden, zu erzeugen und in eine Verbindung einzukoppeln oder es kann auch nur eine dieser beiden Funktionen in einem solchen Testgerät implementiert sein.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1      Ein schematisch dargestelltes Telekommunikationsnetzwerk mit der Best Quality Routing - Funktionalität,

Fig. 2      eine schematisch dargestellte Vermittlungseinheit mit Messvorrichtung.

Grundsätzlich sind in den Figuren gleiche Teile mit gleichen Bezugszeichen versehen.

## Wege zur Ausführung der Erfindung

Anhand des folgenden Ausführungsbeispiels soll das erfindungsgemässe Routing-Verfahren näher erläutert werden.

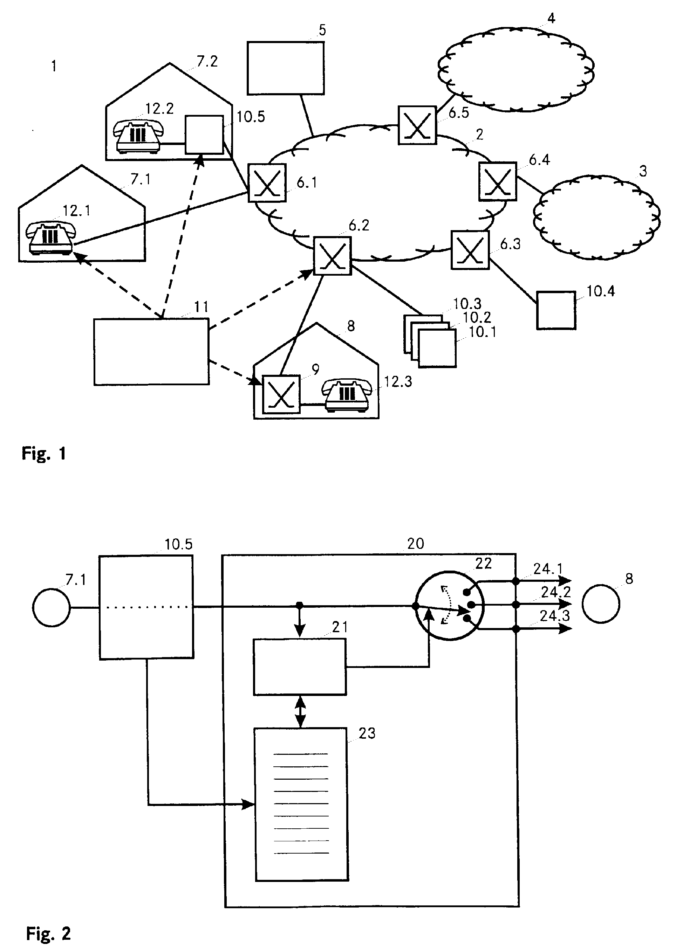

Dazu ist in Fig. 1 schematisch ein Telekommunikationsnetzwerk 1 dargestellt, das aus mehreren Teilnetzen 2, 3, 4 besteht und das zusätzlich zu den üblichen Komponenten wie Management Center 5, Vermittlungsknoten 6.1, 6.2, 6.3, 6.4, 6.5, Teilnehmer 7.1, 7.2 ohne TVA und einem Teilnehmer 8 mit TVA 9, mehrere Messvorrichtungen 10.1, 10.2, 10.3, 10.4, 10.5 und einen Best Quality Router 11 umfasst. Die Teilnehmer 7.1, 7.2 wie auch die Teilnetze 3, 4 sind jeweils mit einem Vermittlungsknoten 6.2 resp. 6.4 und 6.5 des Teilnetzes 2 verbunden. Auch das Management Center 5 ist mit dem Teilnetz 2 verbunden. Die Teilnehmer 7.1, 7.2, 8 verfügen über ein Teilnehmer-Endgerät 12.1, 12.2, 12.3.

Die Messvorrichtungen sind folgendermassen angeordnet: Die Messvorrichtungen 10.1 bis 10.3 bzw. 10.4 sind verbunden mit dem Vermittlungsknoten 6.2 bzw. 6.3 und die Messvorrichtung 10.5 befindet sich beim Teilnehmer 7.1. Die Funktionalität des Best Quality Routers 11 ist an verschiedenen Orten im Netzwerk 1 implementiert: im Teilnehmer-Endgerät 12.1 des Teilnehmers 7.1, in der Messvorrichtung 10.5 beim Teilnehmer 7.2, in der TVA 9 des Teilnehmers 8 und im Vermittlungsknoten 6.2. Dies ist durch die gestrichelten Pfeile angedeutet.

In Fig. 2 ist neben einer Messvorrichtung 10.5 eine Vermittlungseinheit 20 abgebildet, wie sie z.B. in einem Vermittlungsknoten 6.1 vorgesehen ist. Diese Vermittlungseinheit 20 beinhaltet einen Router 21, eine Schalteinheit 22 und eine Leitwegtabelle 23. Die Leitwegtabelle 23 enthält sowohl die statischen, als auch die dynamischen Leitwegparameter. Die statischen Leitwegparameter umfassen beispielsweise Angaben über die Verbindungskosten zu bestimmten Tages- oder Wochenzeiten oder Angaben darüber, welcher Verbindungsweg mit welcher Priorität belegt werden soll. Diese Angaben ändern eher selten und werden z.B. bei der Installation oder anlässlich von Netz-Änderungen struktureller Art meist von Hand oder wie im eingangs zitierten Stand der Technik aktualisiert. Die dynamischen Leitwegparameter dagegen umfassen beispielsweise Angaben über die Qualität eines Verbindungsweges. Diese schliessen sowohl Angaben beispielsweise über die Übertragungsraten oder die Fehlerhäufigkeit, als auch Angaben über die zeitlich abhängige Verfügbarkeit infolge Überlastung eines Verbindungsweges mit ein. Diese Werte können aber erst bei einem Verbindungsaufbau, während einer Verbindung und bei einem Verbindungsabbau bestimmt werden, weshalb sie zu Beginn entweder leer sind oder mit Standard-Vorgaben gefüllt werden.

Ein Teilnehmer 7.1 ist mit der Vermittlungseinheit 20 verbunden und ein anderer Teilnehmer 8 ist an der Vermittlungseinheit eines anderen Vermittlungsknoten 6.2 angeschlossen, wobei im vorliegenden Beispiel drei verschiedene Verbindungswege 24.1, 24.2, 24.3 zwischen den beiden Vermittlungsknoten 6.1, 6.2 existieren. Möchte nun der Teilnehmer 7.1 eine Verbindung zum Teilnehmer 8 aufbauen, gibt er diesen Verbindungswunsch der Vermittlungseinheit 20 bekannt. Der Router 21 ermittelt daraufhin den Ziel-Vermittlungsknoten 6.2 des Teilnehmers 8 und schaut in der Leitwegtabelle 23 nach, welche Verbindungswege 24.1, bis 24.3 vom Teilnehmer 7.1 zum Teilnehmer 8 existieren. Anhand der über jeden Verbindungsweg gespeicherten Informationen in der Leitwegtabelle 23 und aufgrund der notwendigen respektive gewählten Dienstklasse mit den zu erfüllenden bzw. wünschenswerten Anforderungen an die gewünschte Verbindung, wählt der Router 21 den geeignetsten Leitweg aus und veranlasst die Schalteinheit 22, die entsprechende Verbindung aufzubauen.

Schon während dem Verbindungsaufbau werden in der Messvorrichtung 10.5 die gewünschten "Switching Parameter" gemessen. Dies sind Parameter, die sich aus den Signalisierungsmeldungen gewinnen lassen. Sobald die Nutzverbindung zwischen den beiden Teilnehmern 7.1 und 8 hergestellt ist, beginnt die Messvorrichtung 10.5 mit der Messung der "Transmission Parameter", also jener Parameter, die nur durch Messung eines über die Verbindung übertragenen Signals bestimmt werden können. Dazu kann entweder ein von einem der beiden Teilnehmer 7.1, 8 erzeugtes Nutzsignal verwendet werden, oder es wird von einer anderen Messvorrichtung ein spezielles Messsignal in die bestehende Verbindung eingekoppelt, welches von der Messvorrichtung 10.5 gemessen und analysiert werden kann. Wahlweise kann das Messsignal auch von der Messvorrichtung 10.5 selber in die Verbindung eingekoppelt und von einer anderen Messvorrichtung gemessen und analysiert werden. Damit die gemessenen Parameter auch der Messvorrichtung 10.5 zur Auswertung zur Verfügung stehen, müssen diese anschliessend dorthin übertragen werden.

Anstatt zur Messung der gewünschten Parameter bestehende Verbindungen zu verwenden, können alternativ (zufällig, periodisch eine ganze Serie oder regelmässig statistisch verteilt) spezielle Test-Verbindungen zwischen beliebigen Teilnehmern aufgebaut werden, um so möglichst viele Messungen durchführen zu können. Um weitere "Switching Parameter" zu bestimmen, können auch die Signalisierungsmeldungen beim Verbindungsabbau gemessen werden.

Nach der Messung der gewünschten Parameter werden diese in der Messvorrichtung 10.5 analysiert und ausgewertet. Mit Hilfe der so gewonnen Informationen über den verwendeten Verbindungsweg, werden die dynamischen Leitwegparameter für diesen Verbindungsweg in der Leitwegtabelle 23 aktualisiert und stehen somit für die Leitweglenkung künftiger Verbindungen zur Verfügung. So wird quasi ein Lerneffekt erreicht und die Werte in der Leitwegtabelle 23 bleiben immer auf dem aktuellsten Stand. Wie lange eine bestimmte Messung für die Leitweglenkung berücksichtigt wird, hängt stark vom Umfeld und der Konzeption des Netzwerkes ab und kann im Prinzip frei gewählt werden.

Mit der Auswertung der gemessenen Parameter muss jedoch nicht zugewartet werden, bis alle Werte vorliegen, sondern sie kann beginnen, sobald die ersten Werte gemessen sind. So liefern z.B. schon die Angaben darüber, ob ein Verbindungsaufbau-Versuch erfolgreich war oder nicht, wertvolle Informationen über einen Verbindungsweg und können entsprechend ausgewertet und in der Leitwegtabelle 23 nachgetragen werden.

Zusammenfassend ist festzustellen, dass das erfindungsgemässe Routing-Verfahren, indem es durch wiederholtes Messen verschiedener Parameter stets aktuelle Informationen über die Verbindungsqualität der einzelnen Verbindungswege bereitstellt, die Auswahl eines Verbindungsweges ermöglicht, der nicht nur möglichst günstig ist, sondern gleichzeitig auch die zur Abwicklung des angeforderten Dienstes notwendigen Mindestkriterien erfüllt.

**Patentansprüche**

1. Verfahren zur Auswahl eines Leitweges bei einem Verbindungsaufbau von einem Punkt A zu einem Punkt B in einem Telekommunikationsnetzwerk mit mehreren Verbindungswegen zwischen den Punkten A und B unter Berücksichtigung von Verbindungseigenschaften der einzelnen Verbindungswege, dadurch gekennzeichnet, dass zeitlich und/oder räumlich veränderliche Qualitätsparameter der Verbindungswege ermittelt und abgespeichert werden und dass für den Verbindungsaufbau derjenige Verbindungsweg gewählt wird, welcher einem vorgegebenen, mindestens einen Qualitätsparameter enthaltenden Kriterium am besten entspricht.

2. Verfahren nach Anspruch 1, dadurch gekennzeichnet, dass mindestens eine Dienstgüteklasse mit einer Mehrzahl von notwendigen und/oder wünschenswerten Minimalanforderungen an die Qualitätsparameter eines Verbindungsweges definiert wird, wobei derjenige Verbindungsweg gewählt wird, welcher die Minimalanforderungen erfüllt bzw. diesen am nächsten kommt.

3. Verfahren nach Anspruch 1 oder 2, dadurch gekennzeichnet, dass die Verbindungseigenschaften Informationen über das Verhältnis von Verbindungsqualität zu Verbindungskosten der Verbindungswege umfassen.

4. Verfahren nach einem der Ansprüche 1 bis 3, dadurch gekennzeichnet, dass die Informationen über die Qualität der Verbindungswege einen oder mehrere Parameter umfassen, die mittels Messung eines über eine bestehende Verbindung übertragenen Signals oder mittels Messung der Signalisierungsmeldungen beim Auf- bzw. Abbau einer Verbindung sowie während einer bestehenden Verbindung gewonnen werden.

5. Verfahren nach Anspruch 4, dadurch gekennzeichnet, dass das übertragene Signal ein spezielles Messsignal ist, das zuvor in die bestehende Verbindung eingekoppelt wurde.

6. Verfahren nach einem der Ansprüche 4 oder 5, dadurch gekennzeichnet, dass die bestehende Verbindung eine speziell zu Testzwecken aufgebaute Testverbindung ist.

7. Verfahren nach einem der Ansprüche 4 bis 6, dadurch gekennzeichnet, dass die Messungen durch in die Verbindungswege eingeschaltete Messvorrichtungen durchgeführt werden, die zusätzlich auch die Auswertung der gemessenen Parameter vornehmen .

8. Verfahren nach einem der Ansprüche 1 bis 7, dadurch gekennzeichnet, dass die Auswahl des Leitweges in einem Vermittlungsknoten eines Telekommunikationsnetzwerkes erfolgt, wobei der ausgewählte Verbindungsweg durch ein Leitungsbündel und einen Übertragungskanal in diesem Leitungsbündel definiert ist.

9. Verfahren nach einem der Ansprüche 1 bis 7, dadurch gekennzeichnet, dass das Telekommunikationsnetz aus mehreren Teilnetzen besteht und die Auswahl des Leitweges in einer Teilnehmerstation, einer Hauszentrale oder auf der Teilnehmerseite einer Amtszentrale eines Teilnetzes erfolgt, wobei der ausgewählte Verbindungsweg durch einen Prefixcode definiert ist, der festlegt, über welches der zur Verfügung stehenden Teilnetze die Verbindung geroutet werden soll.

10. Schaltungsanordnung für ein Telekommunikationsnetzwerk mit mehreren Verbindungswegen zwischen zwei Punkten A und B zur Durchführung des Verfahrens nach Anspruch 1, dadurch gekennzeichnet, dass es mindestens eine Messvorrichtung zur Ermittlung, Abspeicherung und Auswertung der zeitlich und/oder räumlich veränderlichen Qualitätsparameter der Verbindungswege zwischen den beiden Punkten A und B, sowie mindestens einen Best Quality Router aufweist, der für einen Verbindungsaufbau denjenigen Verbindungsweg auswählt, welcher einem vorgegebenen, mindestens einen Qualitätsparamter enthaltenden Kriterium am besten entspricht.

11. Schaltungsanordnung nach Anspruch 10, dadurch gekennzeichnet, dass zusätzlich mindestens ein Testgerät zum Aufbauen von Testverbindungen und/oder zum Einkoppeln von speziellen Messsignalen vorgesehen ist.

**Fig. 1**

**Fig. 2**

Europäisches
Patentamt

**EUROPÄISCHER RECHERCHENBERICHT**

Nummer der Anmeldung

EP 99 81 0430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 615 391 A (ALCATEL NV; BELL TELEPHONE MANUFACTURING NV) 14. September 1994 (1994-09-14) * Spalte 1, Zeile 1 - Zeile 17 * * Spalte 2, Zeile 12 - Zeile 32 * * Spalte 12, Zeile 19 - Spalte 13, Zeile 48 * * Ansprüche 1,11,16 * | 1,3-7, 10,11 | H04Q3/66 |
| A | | 2,8,9 | |
| X | US 5 802 502 A (GELL M A ET AL) 1. September 1998 (1998-09-01) * Spalte 3, Zeile 51 - Spalte 8, Zeile 50 * | 1-3,8-10 | |
| A | | 4-7,11 | |
| X | US 5 878 121 A (NAKANISHI T) 2. März 1999 (1999-03-02) * Spalte 3, Zeile 61 - Zeile 67 * * Spalte 4, Zeile 59 - Zeile 52 * * Ansprüche 1-3,11-13 * | 1-3,8,10 | |
| A | | 4-7,9,11 | **RECHERCHIERTE SACHGEBIETE (Int.Cl.7)** H04Q |
| X | EP 0 848 560 A (SIEMENS BUSINESS COMMUNICATION SYSTEMS, INC) 17. Juni 1998 (1998-06-17) * Spalte 4, Zeile 3 - Zeile 56 * * Spalte 5, Zeile 44 - Spalte 11, Zeile 6 * | 1-3,10 | |
| A | | 4-9,11 | |

Der vorliegende Recherchenbericht wurde für alle Patentansprüche erstellt

| Recherchenort | Abschlußdatum der Recherche | Prüfer |
|---|---|---|
| DEN HAAG | 14. Oktober 1999 | Vercauteren, S |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 81 0430

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 0615391 | A | 14-09-1994 | AU | 667763 B | 04-04-1996 |
| | | | AU | 5514594 A | 15-09-1994 |
| | | | CA | 2118559 A | 10-09-1994 |
| | | | CN | 1099545 A | 01-03-1995 |
| | | | FI | 941093 A | 10-09-1994 |
| | | | JP | 6350520 A | 22-12-1994 |
| | | | US | 5504935 A | 02-04-1996 |
| US 5802502 | A | 01-09-1998 | AU | 700554 B | 07-01-1999 |
| | | | AU | 6729994 A | 20-12-1994 |
| | | | AU | 9415198 A | 04-02-1999 |
| | | | AU | 9415398 A | 04-02-1999 |
| | | | CA | 2159829 A | 08-12-1994 |
| | | | CN | 1124558 A | 12-06-1996 |
| | | | EP | 0700625 A | 13-03-1996 |
| | | | WO | 9428683 A | 08-12-1994 |
| | | | SG | 43106 A | 17-10-1997 |
| | | | JP | 9504912 T | 13-05-1997 |
| US 5878121 | A | 02-03-1999 | JP | 8079409 A | 22-03-1996 |
| EP 0848560 | A | 17-06-1998 | US | 5898668 A | 27-04-1999 |

EPO FORM P0461

Für nähere Einzelheiten zu diesem Anhang : siehe Amtsblatt des Europäischen Patentamts, Nr.12/82